# EUROPÄISCHE PATENTANMELDUNG

(11) **EP 4 606 933 A1**
(43) Veröffentlichungstag der Anmeldung: **27.08.2025**
(21) Anmeldenummer: 24159645.1
(22) Anmeldetag: 26.02.2024
(51) Int. Cl.: C25B 1/04, C25B 9/23, C25B 11/052, C25B 11/085, C25B 13/08, C08J 5/22, H01M 4/86

(54) **RAKELBARE KATALYSATORTINTE MIT HOHEM FESTSTOFFANTEIL**

(71) Anmelder: Evonik Operations GmbH, 45128 Essen (DE)
(72) Erfinder: MERKULOV, Sonja, 45770 Marl (DE); WATZELE, Sebastian, 45657 Recklinghausen (DE); WILD, Andreas, 45721 Haltern am See (DE)
(74) Vertreter: Evonik Patent Association

(57) **Zusammenfassung**

Die Erfindung betrifft eine Katalysatortinte, ein Verfahren zur Beschichtung von Substraten mit dieser Tinte, die durch das Verfahren erhaltenen, beschichteten Substrate und deren Verwendung. Ihr lag die Aufgabe zu Grunde, eine Katalysatortinte anzugeben, die einen hohen Feststoffgehalt aufweist und sich gleichzeitig noch gut rakeln lässt. Die Katalysatortinte soll möglichst keine Lösemittel enthalten, die als karzinogen, mutagen oder reproduktionstoxisch bekannt sind. Die mit der Katalysatortinte hergestellten, beschichteten Substrate sollen insbesondere in der alkalischen Membranwasserelektrolyse als katalytisch aktive bzw. aktivierbare Anionenaustauschmembran einsetzbar sein. Gelöst wurde diese Aufgabe durch ein Lösemittelgemisch enthaltend Alkanol und Acetonitril. Die Verbesserung besteht darin besteht, dass sowohl der Gewichtsanteil des Acetonitrils, also auch der Gewichtsanteil des Alkanols jeweils größer ist als der Gewichtsanteil des in der Katalysatortinte enthaltenden Binders.

## Beschreibung

Die Erfindung betrifft eine Katalysatortinte, ein Verfahren zur Beschichtung von Substraten mit dieser Tinte, die durch das Verfahren erhaltenen, beschichteten Substrate und deren Verwendung.

Katalysatortinte ist ein Begriff aus dem Gebiet der Herstellung von Bauteilen elektrochemischer Zellen. Elektrochemische Zellen sind Vorrichtungen, mit denen elektrochemische Reaktionen durchgeführt werden. In elektrochemischen Reaktionen werden Stoffe unter Aufnahme bzw. Abgabe elektrischer Energie umgesetzt. Um diese Reaktionen besonders effizient zu betreiben, bietet es sich in vielen Fällen an, die Reaktion in Gegenwart so genannter Elektrokatalysatoren durchzuführen. Elektrokatalysatoren sind Substanzen, welche die gewünschte elektrochemische Reaktion beschleunigen oder sogar erst ermöglichen ohne dabei wesentlich verbraucht zu werden. Bei den Elektrokatalysatoren handelt es sich oft um partikuläres, anorganisches Material, meist um Metalle oder Metalloxide.

Um eine elektrochemische Reaktion in Gegenwart eines Elektrokatalysator durchführen zu können, muss der Elektrokatalysator in die elektrochemische Zelle eingebaut werden. Dies geschieht bei technischen Ausführungen von elektrochemischen Zellen häufig dadurch, dass ein Bauteil der elektrochemischen Zelle mit einer elektrokatalytisch aktiven bzw. aktivierbaren Beschichtung versehen wird, welche den Elektrokatalysator enthält.

Als zu beschichtendes Bauteil kommen insbesondere Separatoren bzw. Membranen oder Elektroden oder fluidtechnische Einrichtungen wie Gasverteiler in Betracht. Sofern eine Membran mit einer katalytisch aktiven bzw. aktivierbaren Beschichtung versehen ist, spricht die Fachwelt von einer katalytisch beschichteten Membran (engl. catalyst coated membrane - CCM). Wenn Elektroden oder andere Bestandteile einer Zelle mit Elektrokatalysator beschichtet werden, ist von einem katalytisch beschichteten Substrat (engl. catalyst coated substrate - CCS) die Rede.

Im vorliegenden Kontext wird der Begriff "Substrat" allgemein für das zu beschichtende Objekt gebraucht. Dabei kann es sich allgemein um ein Bauteil einer elektrochemischen Zelle handeln, wie etwa eine Membran oder eine Elektrode; der Begriff umfasst aber auch Hilfsmittel, die nicht in der Zelle eingebaut werden, wie etwa Transfersubstrate, die zum indirekten Beschichten von Elektroden oder Membranen gebraucht werden.

Eine Katalysatortinte ist ein Gemisch mindestens eines partikulären Elektrokatalysators und mindestens einer flüssigen Lösung eines Binders in einem Lösemittel. Die Katalysatortinte ist dafür bestimmt, auf das zu beschichtende Substrat aufgetragen zu werden. Dort aufgetragen wird die Katalysatortinte getrocknet, sodass das Lösemittel sich verflüchtigt und der Binder aus der Lösung ausfällt. Zurück bleiben der Elektrokatalysator und der Binder, welche zusammen die katalytisch aktive bzw. aktivierbare Beschichtung des Substrats bilden. Der Elektrokatalysator verleiht der Beschichtung ihre katalytische Aktivität, währenddessen der Binder den Elektrokatalysator auf dem Substrat immobilisiert. Der aus der Lösung ausgefallene Binder bildet nämlich eine feste, mit dem Substrat verbundene Matrix, in welcher der partikuläre Elektrokatalysator dispergiert ist.

Bei dem Binder handelt es sich in der Regel um Polymere. Gerne werden solche Polymere als Binder eingesetzt, die eine gewisse lonenleitfähigkeit aufweisen, nämlich so genannte lonomere. Es sind lonomere bekannt, welche eine Leitfähigkeit für Anionen aufweisen und solche, die eine Leitfähigkeit für Kationen aufweisen.

Da lonomere keine nennenswerte Leitfähigkeit für Elektronen aufweisen, enthalten manche Katalysatortinten auch Leitfähigkeitsadditive wie Ruß.

Des Weiteren kann eine Katalysatortinte auch Verarbeitungshilfsmittel wie Tenside oder Rheologie Hilfsmittel enthalten.

Schließlich kann eine Katalysatortinte auch ein flüssiges Dispergiermedium enthalten, welches die Viskosität der Tinte reduziert. Die Katalysatortinte wird mit dem Dispergiermedium verdünnt. Als Dispergiermedien werden gern leicht flüchtige Stoffe wie Wasser oder Ethanol verwendet, die im Trocknungsvorgang gemeinsam mit dem Lösemittel abdampfen.

Im Ergebnis ist eine Katalysatortinte als eine Vorstufe der zu erzeugenden katalytisch aktiven bzw. aktivierbaren Beschichtung des Substrats aufzufassen.

Die Wahl des Elektrokatalysators, des Binders und etwaiger Leitfähigkeitsadditive richtet sich nach dem beabsichtigten Einsatzweck des beschichteten Bauteils, genauer gesagt nach der zu betreibenden elektrochemischen Reaktion und nach dem Einsatzort des Bauteils, etwa auf Seiten der Anode oder der Kathode der elektrochemischen Zelle.

Die Wahl des Lösemittels und ggf. der Verarbeitungshilfsmittel oder Dispergiermedien richtet sich indes nach den Vorgaben der gewünschten Beschichtungstechnologie: Sowohl das Lösemittel als auch das Dispergiermedium werden im Zuge der Trocknung entfernt und bilden so keinen Teil der späteren katalytisch aktiven bzw. aktivierbaren Beschichtung. Lösemittel und Dispergiermedien werden daher so gewählt, dass die Tinte die gewünschte Verarbeitbarkeit hat. Ist dies allein durch geschickte Wahl von Lösemittel und Dispergiermedium nicht möglich, sind Verarbeitungshilfsmittel erforderlich. Da diese aber im Zweifelsfalle in der Beschichtung zurück bleiben und dort die Effizienz der elektrochemischen Reaktion beineinträchtigen, sollte eine gute Katalysatortinte bestenfalls ohne solche Verarbeitungshilfsmittel auskommen.

Die vorliegende Erfindung befasst sich konkret mit der optimalen Auswahl von Lösemittel und optionalen Dispergiermedien. Ihr vornehmliches Ziel ist es, einen hohen Feststoffanteil in der Katalysatortinte zu erzielen, damit beim Beschichten möglichst viel schichtbildendes Material pro Zeiteinheit auf das Substrat aufgebracht werden kann. Der Feststoffgehalt beschreibt nämlich die Summe aller Anteile der Komponenten der Tinte, die nach dem Trocknen auf dem Substrat als Feststoff zurück bleiben, also die nicht flüchtigen Bestandteile der Tinte. Dies sind im Wesentlichen der ausgefallene Binder und der Elektrokatalysator. Da Lösemittel und ein etwaiges Dispergiermedium beim Trocknen ausgetrieben werden, sind sie kein Teil des Feststoffgehalts. Im Gegenteil, im Interesse eines hohen Feststoffgehalts muss der Anteil an flüchtigen Bestandteilen wie Lösemittel und etwaigen Dispergiermedien reduziert sein.

Ein weiteres Ziel der Erfindung ist es, die dynamische Viskosität der Katalysatortinte so einzustellen, dass sie sich schnell und mit guter Qualität verarbeiten lässt. Insbesondere soll sich die Katalysatortinte auf das Substrat per Rakel auftragen lassen, weil das Rakeln eine rationelles Beschichtungsverfahren ist, welches eine hohe Beschichtungsqualität liefert und gut beherrscht wird. Leider besteht ein Zielkonflikt zwischen hohem Feststoffgehalt und guter Rakelbarkeit, weil ein zu hoher Feststoffgehalt die Viskosität der Katalysatortinte so stark erhöht, dass sie sich nicht mehr rakeln lässt.

Ausgehend von diesen allgemeinen technischen Vorgaben verdichtet sich die technische Aufgabe im Lichte des folgenden Standes der Technik:
Eine besondere Form einer elektrochemischen Reaktion ist die alkalische Membranwasserelektrolyse (alkaline water membrane electrolysis - AEMWE). Sie dient für die Herstellung von Wasserstoff H₂ und Sauerstoff O₂ aus Wasser H₂O unter Aufnahme elektrischer Energie. Die AEMWE kommt als eine Technologie zur nachhaltigen Herstellung von "grünem" Wasserstoff in Betracht, sofern die erforderliche elektrische Energie aus regenerativen Quellen gewonnen wird.

Einen Überblick über Aufbau und Materialien der gegenwärtig in der AEMWE eingesetzten elektrochemischen Zellen bieten:
Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k

Insbesondere für die Herstellung der in der AEMWE eingesetzten Membranen werden Polymere mit Leitfähigkeit für Anionen, genauer gesagt, für Hydroxid-Ionen (OH-) benötigt.

Polymere mit Leitfähigkeit für Anionen sind aus den Patentanmeldungen EP3770201A1, EP4032934A1 und EP4059988A1 bekannt. Sie eignen sich zur Herstellung von Anionenaustauschmembranen (engl. anion exchange membranes - AEM). Diese können wiederum in der alkalischen Wasserselektrolyse eingesetzt werden. Keine der dort offenbarten AEM weist eine katalytische Aktivität auf.

Im Zuge der Herstellung der AEM werden die in EP3770201A1 und EP4032934A1 offenbarten lonomere in N,N-Dimethylacetamid (DMAC) und/oder in N,N-Dimethylformamid (DMF) gelöst. Da DMAC und DMF als karzinogen, mutagen oder reproduktionstoxisch (CMR) bekannt sind, werden sie gemäß REACH-Verordnung jeweils als CMR-Stoff klassifiziert, was in der industriellen Verarbeitung kostenintensive Sicherheitsmaßnahmen erfordert.

Bei der in EP4059988A1 beschriebenen Synthese der Präkursoren des Ionomers wird Dimethylsulfoxid (DMSO) und Acetonitril (ACN) verwendet. Beide Lösemittel sind nicht als CMR-Stoff eingestuft. Allerdings wird dieser Vorteil von der EP4059988A1 nicht gehoben, weil beim Gießen der Membran weiterhin DMAC als Lösemittel genutzt wird: Somit muss bei der Produktion der Anionenaustauschmembran weiterhin mit einem CMR-Stoff hantiert werden, was die Produktion verteuert.

Die Herstellung einer Katalysatortinte aus den in den vorzitierten Schriften offenbarten lonomeren ist wiederum in der WO2023088714A1 offenbart. Die Katalysatortinte enthält als Lösemittel DMSO und zusätzlich ein Ethanol/Wasser-Gemisch als Dispergiermedium. Genutzt wird diese Tinte um CCM oder CCS herzustellen, die in der AEMWE eingesetzt werden können. Wenngleich die Beschreibung der WO2023088714A1 nahe legt, dass sich diese Tinte rakeln ließe, wurde im Experimentalteil ein Ultraschallsprühbeschichter zum Auftragen der Katalysatortinte auf diverse Substrate verwendet. Tatsächlich zeigen hier vorgelegte Versuche, dass die in WO2023088714A1 offenbarte Katalysatortinte sich nicht rakeln lässt. Der Katalysatorgehalt dieser Tinte berechnet sich im Übrigen zu etwa 11 mg/ml was für eine Sprühtinte schon gut, für eine Rakeltinte aber noch recht gering ist.

In der zum Zeitpunkt der Anmeldung noch unveröffentlichten Europäischen Patentanmeldung 24152389.3 derselben Anmelderin ist eine Katalysatortinte beschrieben, deren Binder gemäß EP3770201A1 hergestellt wurde. Die Katalysatortinte enthält des weiteren Silica, DMSO, Ethanol und Wasser. Die Beschreibung erwähnt auch, dass sich DMSO, Ethanol und Acetonitril als Lösemittel einsetzen ließen, nämlich allein oder in Mischungen untereinander. Ein Mischungsverhältnis ist nicht angegeben. Im Übrigen zeigen hier vorgelegte Versuche, dass sowohl Ethanol als auch Acetonitril allein das in EP3770201A1 offenbarte Polymer nicht zu lösen vermögen.

Eine alternative, rakelfähige Katalysatortinte zur Beschichtung von Anionenaustauschmembranen wurde von Koch et. entwickelt:
Koch, S., Metzler, L., Kilian, S. K., Heizmann, P. A., Lombeck, F., Breitwieser, M., Vierrath, S., Toward Scalable Production: Catalyst-Coated Membranes (CCMs) for Anion-Exchange Membrane Water Electrolysis via Direct Bar Coating. Adv. Sustainable Syst. 2023, 7, 2200332. DO!: 10.1002/adsu.202200332

Leider enthält auch diese Tinte einen CMR-Stoff als Lösemittel, nämlich Methanol. Eine industrielle Fertigung im Bereich der Gültigkeit der REACH-Verordnung ist auch hier mit hohen Kosten verbunden.

Vor diesem Hintergrund bestand die technische Aufgabe darin, eine Katalysatortinte anzugeben, die einen hohen Feststoffgehalt aufweist und sich gleichzeitig noch gut rakeln lässt. Die Katalysatortinte soll möglichst keine Lösemittel enthalten, die als karzinogen, mutagen oder reproduktionstoxisch bekannt sind. Die mit der Katalysatortinte hergestellten, beschichteten Substrate sollen insbesondere in der alkalischen Membranwasserelektrolyse als katalytisch aktive bzw. aktivierbare Anionenaustauschmembran einsetzbar sein.

Gelöst wird diese Aufgabe durch eine Katalysatortinte nach Anspruch 1.

Gegenstand der Erfindung ist mithin eine Katalysatortinte mit den folgenden Merkmalen:
a) die Katalysatortinte umfasst einen festen Elektrokatalysator in partikulärer Form;
b) die Katalysatortinte umfasst ein flüssiges Lösemittelgemisch enthaltend zumindest Acetonitril und mindestens ein Alkanol;
c) die Katalysatortinte umfasst einen Binder, welcher in dem Lösemittelgemisch gelöst ist, wobei es sich bei dem Binder um ein Anionen leitendes Polymer handelt, welches mindestens eine Struktur enthält, die einer der folgenden Formeln (I), (II), (III) entspricht: 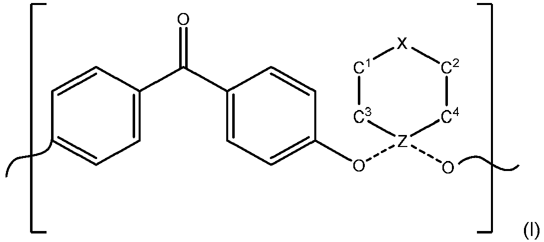
   wobei in (I) X für ein Strukturelement steht, umfassend ein positiv geladenes Stickstoffatom, welches an C1 und C2 gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
   und wobei in (I) Z für ein Strukturelement steht, das ein Kohlenstoffatom umfasst, welches an C3 und C4 gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C1- bis C4-Alkylreste substituiert sein können; 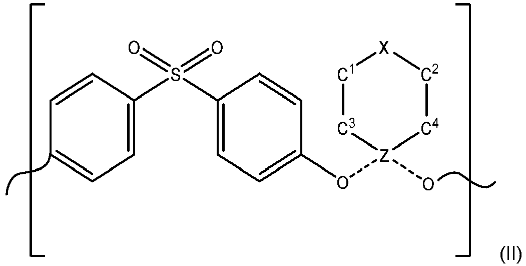
   wobei in (II) X für ein Strukturelement steht, umfassend ein positiv geladenes Stickstoffatom, welches an C1 und C2 gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
   und wobei in (II) Z für ein Strukturelement steht, das ein Kohlenstoffatom umfasst, welches an C3 und C4 gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen C1- bis C4-Alkylreste substituiert sein kann, insbesondere mit einer Methyl-, iso-Propyl- oder tert-Butyl-Gruppe, wobei die Methylgruppe bevorzugt ist; 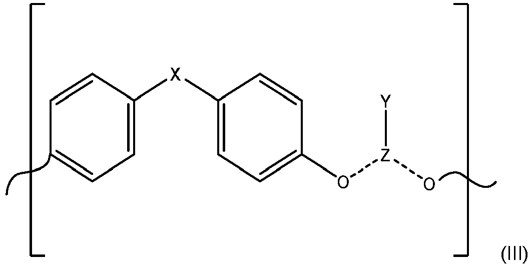
   wobei in (III) X für eine Keton- oder Sulfon-Gruppe steht; wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist; und wobei in (III) Y für ein Strukturelement steht, welches mindestens ein Stickstoffatom mit positiver Ladung umfasst, wobei dieses Stickstoffatom mit dem Strukturelement Z verbunden ist;
wobei die Verbesserung der Katalysatortinte darin besteht, dass sowohl der Gewichtsanteil des Acetonitrils, also auch der Gewichtsanteil des Alkanols jeweils größer ist als der Gewichtsanteil des Binders. Die besagten Gewichtsanteile beziehen sich jeweils auf das Gesamtgewicht der Katalysatortinte.

Die vorliegende Erfindung beruht auf der überraschenden Erkenntnis, dass sich die interessierenden Binder der Formel (I), (II) oder (III) mit einer Kombination aus einem Alkanol (ROH) und Acetonitril (ACN) lösen lassen. Diese Erkenntnis überrascht deshalb, weil als für diese lonomere geeignete Lösemittel bisher stets CMR-Stoffe wie DMAC oder DMF beschrieben wurden. Hinzu kommt, dass sich diese lonomere weder in reinem Ethanol, noch in reinem Acetonitril lösen lassen: Erst ein Gemisch aus Acetonitril mit einem Alkanol vermag die relevanten Binder zu lösen. Um im Ergebnis eine gut verarbeitbare Tinte zu erhalten, muss der Anteil an Alkanol und Acetonitril jeweils größer sein als der Anteil des Binders. Gemeint sind auch hier die Gewichtsanteile bezogen auf das Gesamtgewicht der Tinte.

Ein weiterer unerwarteter Effekt besteht darin, dass die Verwendung des Lösemittelgemisches aus ACN und ROH es erlaubt, den Feststoffgehalt der Tinte deutlich zu erhöhen.

Erfreulicherweise kommt bei alledem ein potentiell CMR-freier Lösemittelcocktail zum Einsatz, welcher der Produktion geringere Sicherheitsanforderung auferlegt, als dies etwa bei der Verarbeitung von DMAC-basierten Tinten der Fall ist.

"Potentiell CMR-frei" bedeutet in diesem Zusammenhang, dass es möglich ist, die erfindungsgemäße Tinte ohne Lösemittel zu formulieren, die dafür bekannt sind, karzinogen, mutagen oder reproduktionstoxisch zu wirken. Gleichwohl ist es möglich, in der Formulierung ein Alkanol zu verwenden, welches einem entsprechenden Verdacht ausgesetzt ist, wie beispielsweise Methanol. Es kann unter gewissen Umständen für die Verarbeitbarkeit der Tinte von Vorteil sein, ein CMR-relevantes Alkanol als Lösemittel zu verwenden und dafür höhere Sicherheitsvorkehrungen bei der Beschichtung in Kauf zu nehmen. Ist dies nicht gewünscht, erlaubt die erfindungsgemäße Formulierung aber auch die Verwendung von solchen Alkanolen, die nicht als CMR-Stoff klassifiziert sind, wie etwa 2-Propanol.

Innerhalb des Lösemittelgemisches können ACN und ROH in unterschiedlichen Verhältnissen vorliegen. Wichtig ist, dass beide Stoffe vorhanden sind und dass ihr individueller Gewichtsanteil größer ist als der Gewichtsanteil des Binders. Das Verhältnis des Gewichtsanteils des Acetonitrils zum Gewichtsanteils des Alkanols kann Beispielweise in der Bereich zwischen 1:10 und 17:1 liegen.

Eine besonders gute Rakelbarkeit und ein besonders hoher Feststoffgehalt lässt sich formulieren, indem der Tinte zusätzlich Dimethylsulfoxid (DMSO) als Lösemittel zugegeben wird. DMSO ist nicht CMR-relevant.

Falls die Viskosität der Katalysatortinte zu hoch sein sollte, ist es möglich, Tinte mit einem Dispergiermedium zu verdünnen. Anders als das Lösemittelgemisch löst das Dispergiermedium den Binder nicht. Der partikuläre Elektrokatalysator kann jedoch in dem Dispergiermedium dispergiert sein. Es wird einfachsten falls Wasser als Dispergiermedium genutzt, weil es leicht flüchtig und preiswert ist. Außerdem ist es kein CMR-Stoff. Eine besondere Ausführungsform der Erfindung sieht daher vor, dass die Katalysatortinte zusätzlich Wasser umfasst. Der Gewichtsanteil an Wasser kann größer sein als jeder andere Gewichtsanteil der übrigen Komponenten der Katalysatortinte. Gleichwohl sollte die Katalysatortinte nicht wesentlich mehr Wasser enthalten als übrige Komponenten.

Ein konkreter Rezepturvorschlag für eine vorteilhafte Katalysatortinte mit hohem Feststoffgehalt ist in Tabelle 1 niedergelegt.

**Tabelle 1: Vorteilhafte Rezeptur einer erfindungsgemäßen Katalysatortinten**

| | Komponente | Minimalanteil (Gew.-%) | Maximalanteil (Gew.-%) |
|---|---|---|---|
| Dimethylsulfoxid (DMSO) | | 0 | 40 |
| Alkanol (ROH) | | 2 | 75 |
| Acetonitril (ACN) | | 2 | 85 |
| Wasser (H2O) | | 0 | 60 |
| Binder (I), (II), (III) | | 0.8 | 46 |
| Elektrokatalysator (eCat) | | 8 | 35 |

Es versteht sich von selbst, dass die Summe der Gewichtsanteile aller in Tabelle 1 gelisteten Komponenten 100 Gew.-% nicht übersteigt. Jedoch ist es möglich, dass die Summe 100 Gew.-% nicht erreicht, nämlich dann, wenn die Katalysatortinte eine weitere, nicht in Tabelle 1 aufgeführte Komponente umfasst. Vorteilhafterweise besteht die Katalysatortinte ausschließlich aus den in der Tabelle 1 gelisteten Komponenten. Die Summe der Gewichtsanteile aller in der Tabelle 1 gelisteten Komponenten beträgt in dem Fall genau 100 Gew.-%.

Als Alkanol ROH kann grundsätzlich jedes Alkanol genutzt werden. Beispiele dafür sind: Methanol, Ethanol, 1-Propanol, 1-Butanol, 1-Pentanol, 1-Hexanol, 1-Heptanol, 1-Octanol, 1-Nonanol, 1-Decanol, 2-Propanol. Es können auch sekundäre oder tertiäre Alkanole verendet werden. Vorzugsweise wird Ethanol EtOH als Alkanol verwendet, denn EtOH ist nicht als CMR-Stoff klassifiziert. Ebenso gut lassen sich 1-Propanol oder 2-Propanol verwenden, die ebenfalls nicht CMR-relevant sind. Selbstverständlich können auch Mischungen dieser Alkanole eingesetzt werden.

Vorzugweise wird die Katalysatortinte so formuliert, dass der Binder vollständig in dem Lösemittelgemisch gelöst ist. Wenn der Binder teilweise aus dem Lösemittelgemisch ausfällt, wird die Tinte nämlich klumpig und lässt sich nicht mehr gut verarbeiten. Vorzugweise enthält die Tinte neben dem obligatorischen Binder, der eine Struktur nach Formel (I), (II) oder (III) enthält, keinen weiteren Binder.

Um in die Katalysatorschicht keine Störstoffe einzutragen, welche die Elektrolyse beeinträchtigen könnten, sollte die Katalysatortinte möglichst ausschließlich aus den bisher explizit genannten Komponenten bestehen. Unter Umständen kann es aber dennoch erforderlich sein, eine weitere Komponente in die Katalysatortinte zuzugeben, welche sich von den vorgenannten Komponenten unterscheidet. Dabei kann es sich um organische oder anorganische Zusätze handeln, etwa um ein Dispergierhilfsmittel oder um ein Rheologiehilfsmittel oder um ein Tensid oder um ein Leitfähigkeitsadditiv handeln. Konkrete Beispiele für weitere Komponenten sind Silica oder Ruß. Der Ruß stellt ein Leitfähigkeitsadditiv dar, Silica eignet sich als Rheologiehilfsmittel.

Der Kennwert der dynamischen Viskosität *η* der Katalysatortinte sollte zwischen 10¹ mPas und 10⁴ mPas liegen. Die dynamische Viskosität *η* wird bei einer Temperatur von 25°C mit einem Rotationsrheometer mit Platte-Platte-Geometrie gemessen. Der Durchmesser der Platten beträgt 40 mm, der Abstand zwischen den Platten beträgt 1 mm. Die dynamische Viskosität wird bei steigenden Schergeschwindigkeiten zwischen 0.1 s⁻¹ und 1000 s⁻¹ gemessen, als Kennwert wird die dynamische Viskosität bei 1 s⁻¹ herangezogen. Ein geeignetes Rotationsrheometer mit Platte-Platte Geometrie ist beispielsweise bei Malvern Kinexus erhältlich.

Die erfindungsgemäße Katalysatortinte wurde für die Herstellung von katalytisch beschichteten Substraten entwickelt. Ein entsprechendes Beschichtungsverfahren, welches die erfindungsgemäße Tinte nutzt, umfasst mindestens die folgenden Schritte:
i) Bereitstellen des Substrats;
ii) Bereitstellen einer erfindungsgemäßen Katalysatortinte;
iii) Auftragen der Katalysatortinte auf das Substrat;
iv) Trocknen der auf das Substrat aufgetragenen Katalysatortinte.

Ein solches Herstellungsverfahren ist daher ein weiterer Gegenstand der Erfindung.

Die Tinte zeichnet sich durch ihre gute Rakelbarkeit aus. Daher erfolgt das Auftragen der Katalysatortinte auf das Substrat vorzugsweise durch Rakeln.

Als Substrat, wird vorzugweise eine Anionen leitende Membran verwendet. Durch die Beschichtung mit der Katalysatortinte entsteht eine katalytisch aktive bzw. aktivierbare AEM.

Besonders bevorzugt wird eine AEM als Substrat verwendet, welche mindestens eine Struktur gemäß Formel (I), (II) oder (III) enthält. Dies bedeutet, dass die Membran und der Binder im Wesentlichen aus demselben lonomer bestehen. Dies schafft eine besonders gute Anbindung der Katalysatorschicht auf der Membran.

Die Vorteile der erfindungsgemäßen Katalysatortinte wirken sich nicht nur auf die Produktionskosten aus, sondern führen auch zu einem besseren Produkt: Versuche zeigen, dass die erfindungsgemäße Tinte zu einer besseren Effizienz des damit beschichteten Substrats führt, was wohl auf eine bessere Beschichtungsqualität zurückzuführen ist. Ein katalytisch beschichtetes Substrat, welches durch das erfindungsgemäße Beschichtungsverfahren mit der erfindungsgemäßen Tinte erhältlich ist, ist daher ebenfalls ein Gegenstand der Erfindung.

Da die Vorteile des erfindungsgemäßen Substrats insbesondere in der AEMWE zu Tage treten, nämlich in einer Verbesserung der Effizienz, ist die Verwendung eines erfindungsgemäßen, katalytisch beschichteten Substrats in der alkalischen Wasserelektrolyse ein weiterer Gegenstand der Erfindung. Die Verwendung erfolgt dadurch, dass die alkalische Wasserelektrolyse in Gegenwart des katalytisch beschichteten Substrats durchgeführt wird. Der in der Katalysatorschicht enthaltene Elektrokatalysator katalysiert dabei die elektrochemische Reaktion. Die Katalysatorschicht kann zugleich als Elektrode dienen. Sofern als Substrat eine AEM genutzt wurde, fungiert diese als Membran der AEMWE und transportiert Hydroxidionen OH- aus dem kathodischen Kompartiment der elektrochemischen Zelle in das anodische Kompartiment.

Nach dem derzeitigen Forschungstand lassen sich die folgenden Elemente in Reinform, als Oxid, als Hydroxid, als Oxidhydroxid oder als Phosphid in der erfindungsgemäßen Katalysatortinte verarbeiten: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh) und Cer (Ce). Mithin kommen die Elemente in Reinform oder als Oxid oder als Hydroxid oder als Oxidhydroxid jeweils einzeln oder in Kombinationen als Elektrokatalysator in Betracht. Der Elektrokatalysator wird in partikulärer Form, also als Pulver oder Granulat in die Tinte formuliert.

Ganz besonders bevorzugt wird die Katalysatortinte so formuliert, dass sie als Elektrokatalysator Platin oder Platinlegierung geträgert auf Kohlenstoff (Pt/C) oder ein Nickel-Eisen-(Oxid)Hydroxid (NiFeₐO_{b}H_{c}) oder ein Nickel-Eisen-Phosphid (NiFeₐP_{b}) enthält. Die Indices a, b und c stehen für reelle Zahlen im Intervall von 0 bis 8. Die Indices a, b und c können gleich oder unterschiedlich sein. Das Nickel-Eisen-Verhältnis in dem Nickel-Eisen-(Oxid)Hydroxid sollte idealerweise im von Bereich 2:1 bis 10:1 liegen.

### Beispiele

Im Folgenden zunächst wird das Lösungsverhalten eines interessierenden lonomers untersucht. Sodann werden aus diesem lonomer neun verschiedene Katalysatortinten hergestellt. Die Tinten unterscheiden sich durch die verwendeten Lösemittel. Mit diesen neun Tinten werden dann Katalysatorschichten auf Anionenaustauschmembranen erzeugt. Die katalytisch beschichteten AEM werden abschließend hinsichtlich ihrer Leistungsfähigkeit in der Wasserelektrolyse verglichen. Auf diese Weise werden die mit der Erfindung erzielten Effekte experimentell belegt.

### 1. Herstellung eines lonomers (nicht Teil der Erfindung)

Ein Anionen leitendes, kationisches Polymer wurde entsprechend Beispiel 3 der EP3770201A1 synthetisiert. Dieses Polymer lag zunächst als Lösung vor und wurde mittels Trocknung zu einem Pulver verarbeitet. Anschließend, um den Restlösemittelgehalt zu minimieren, wurde das getrocknete Polymer für 48 h im Vakuumtrockenschrank bei 80 °C weiter getrocknet.

### 2. Versuch zur Löslichkeit des lonomers in Ethanol, 1-Propanol und 2-Propanol

Hierfür wurden drei Gefäße vorbereitet, das Erste mit 27 g Ethanol, das Zweite mit 27 g 1-Propanol und das Dritte mit 27 g 2-Propanol. Diesen Gefäßen wurden jeweils 3 g des aus Beispiel 1 synthetisierten, kationischen Polymers hinzugegeben, die Gefäße verschlossen und bei 60 °C für 4 h geschüttelt. Das Resultat war jeweils ein leicht aufgequollener, erweichter Klumpen des Polymers am Boden des Gefäßes welcher sich nicht signifikant aufgelöst hatte.

### 2 Versuch zur Löslichkeit des lonomers in Acetonitril

Hierfür wurde 3 g des aus Beispiel 1 synthetisierten, kationischen Polymers in ein Gefäß mit 27 g Acetonitril gegeben und bei 60 °C für 4 h geschüttelt. Das Resultat war, dass auch hierbei keine signifikante Auflösung des Polymers sichtbar war.

### 4. Versuch zur Löslichkeit des lonomers in einem Gemisch aus Ethanol bzw. 1-Propanol bzw. 2-Propanol in Verbindung mit Acetonitril

Hierfür wurden drei Gefäße vorbereitet, das Erste mit 13.5 g Ethanol und 13.5 g Acetonitril, das Zweite mit 13.5 g 1-Propanol und 13.5 g Acetonitril und das Dritte mit 13.5 g 2-Propanol und 13.5 g Acetonitril. Diesen Gefäßen wurden jeweils 3 g des aus Beispiel 1 synthetisierten, kationischen Polymers hinzugegeben und bei 60 °C für 4 h geschüttelt. Das Resultat war, eine nahezu klare Lösung. Das Polymer hatte sich in allen drei Gefäßen aufgelöst.

### 5. Zwischenergebnis

Das untersuchte lonomer lässt sich in einem Lösemittelgemisch aus Ethanol und Acetonitril lösen, nicht aber in Ethanol oder Acetonitril allein. Gleiches gilt für das Gemisch 1-Propanol mit Acetonitril bzw. das Gemisch 2-Propanol mit Acetonitril.

### 6. Herstellung einer Anionenaustauschmembran (nicht Teil der Erfindung)

Aus dem in Beispiel 1 synthetisierten, kationischen Polymer wurde eine Anionen leitende Membran hergestellt, wie in Beispiel 4 der EP3770201A1 beschrieben. Hierfür wurde die Polymerlösung vor der Trocknung verwendet.

### 7. Herstellen einer herkömmlichen Katalysatortinte (nicht Teil der Erfindung)

Aus dem in Beispiel 1 synthetisierten, kationischen Polymer wurde eine katalysatorhaltige Dispersion wie in Beispiel 12 der WO2023088714A1 beschrieben hergestellt:
Das lonomer wurde zunächst unter Rühren und Temperatur (60 °C) über 16 h in Dimethylsulfoxid gelöst. Anschließend wurde der Platin auf Kohlenstoff (Pt/C, ~50 Gew.-%) Katalysator im Dispergiermedium, bestehend aus gleichen Volumenteilen Wasser und Ethanol, unter Ultraschall (BRANSONICTM B-1200 E2 der Firma Branson Ultrasonics Corporation, Brookfield, CT, US) für 30 min im Eisbad und einer Leistung von 30 W dispergiert. Nach Zugabe der lonomerlösung (50 mg/ml in DMSO) erfolgt eine weitere Dispergierung mittels Ultraschalls im Eisbad für 1 min bei einer Leistung von 30 W und einer Dispergierung mit einem Schüttler (MS1 Minishaker der Firma IKA, Staufen, DE) für 10 s bei 2500 rpm. Die Anteile wurden entsprechend Tabelle 1, Beispiel 12 der WO2023088714A1 ausgewählt. Also wurde der Katalysatoranteil auf 11 mg/ml festgelegt, wobei die Pt/C Katalysatorpartikel drei Massenanteile und der lonomerfeststoff eine Massenanteil betrug. Dies resultierte in eine niedrigviskose Katalysatortinte.

### 8. Herstellen einer Katalysatortinte mit erhöhtem Feststoffanteil (nicht Teil der Erfindung)

Da die in Beispiel 7 hergestellte Katalysatortinte einen relativ niedrigen Katalysatoranteil von lediglich 11 mg/ml aufweist und ihre Viskosität für eine Rakelbeschichtung nicht optimal erscheint, wurde der Feststoffanteil unter Beibehaltung des Lösemittelverhältnisse und des lonomer zu Katalysatorverhältnis maximiert. Wenn das Massenverhältnis Ethanol: Wasser: DMSO = 0.405 : 0.512 : 0.083 sowie das Verhältnis Katalysator: lonomer = 3 : 1 konstant bleiben sollen, ist die lonomerlösung ein beschränkender Faktor, da sich ein lonomeranteil von über 20 Gew.-% in DMSO sich nicht mehr einfach dispergieren lässt. Somit wurde eine Tinte mit Katalysatorfeststoffanteil von 5.73 Gew.-% nach gleichem Vorgehen wie in Beispiel 7 beschrieben angesetzt. Der Platin auf Kohlenstoff (Pt/C, ~50 Gew.-%) Katalysator wurde im Dispergiermedium, bestehend aus gleichen Volumenteilen Wasser und Ethanol, unter Ultraschall (BRANSONICTM B-1200 E2 der Firma Branson Ultrasonics Corporation, Brookfield, CT, US) für 30 min im Eisbad und einer Leistung von 30 W dispergiert. Nach Zugabe der lonomerlösung (20 Gew.-% in DMSO) erfolgt eine weitere Dispersion mittels Ultraschalls im Eisbad für 1 min bei einer Leistung von 30 W und einer Dispergierung mit einem Schüttler (MS1 Minishaker der Firma IKA, Staufen, DE) für 10 s bei 2500 rpm. Dies resultierte in eine Katalysatortinte mit erhöhter Viskosität im Vergleich zur der unter Beispiel 7 herstellten Katalysatortinte.

### 8^{bis}. Bereitstellen einer erfindungsgemäßen Katalysatortinte auf Basis von EtOH-ACN

Als eine erfinderische Zusammensetzung wurden 13.85 g einer katalysatorhaltigen Tinte angesetzt. Hierfür wurde zunächst 3 g Pt/C (Pt ~ 50 Gew.-%) in ein bruchsicheres Gefäß (Volumen 100 ml) unter Sauerstoffausschluss eingewogen, anschließend 8.5 g Acetonitril hinzugefügt und aufgeschüttelt. Von einer lonomerlösung bestehend aus 15 Gew.-% Ionomerfeststoffaus Beispiel 1, 42.5 Gew.-% Ethanol, 42.5 Gew.-% Acetonitril wurden 2.35 g zur katalysatorhaltigen Zusammensetzung hinzugefügt. Das Gemenge wurde in einem Schüttelmischer (Lau, Germany) für 2 Stunden unter Zuhilfenahme von Mahlkugeln (Gesamtmenge 30 g, Durchmesser 3 mm) für 120 min dispergiert. Der Feststoffgehalt dieser Katalysatortinte betrug demnach 24.2 Gew.-%.

### 8^{ter}. Bereitstellen einer erfindungsgemäßen Katalysatortinte auf Basis von EtOH-ACN-H2O

Als eine weitere erfinderische Zusammensetzung wurde 14.32 g katalysatorhaltiger Tinte angesetzt. Hierfür wurde zunächst 3 g Pt/C (Pt ~ 50 Gew.-%) sowie 6 g Reinstwasser in ein bruchsicheres Gefäß (Volumen 100 ml) unter Sauerstoffausschluss eingewogen, anschließend 0.5 g Acetonitril und 0.5 g Ethanol, hinzugefügt und aufgeschüttelt. Von einer lonomerlösung bestehend aus 10 wt.% lonomerfeststoff aus Beispiel 1, 45 Gew.-% Ethanol, 45 Gew.-% Acetonitril wurden 4.32 g zur katalysatorhaltigen Zusammensetzung hinzugefügt. Das Gemenge wurde in einem Schüttelmischer (Lau, Germany) unter Zuhilfenahme von Mahlkugeln (Gesamtmenge 30 g, Durchmesser 3 mm) für 120 min dispergiert. Der Feststoffgehalt dieser Katalysatortinte betrug demnach 24.0 Gew.-%.

### 9. Bereitstellen einer erfindungsgemäßen Katalysatortinte auf Basis von H2O-DMSO- EtOH-ACN

Als eine weitere erfinderische Zusammensetzung wurde 14.6 g katalysatorhaltiger Tinte angesetzt. Hierfür wurde zunächst 3 g Pt/C (Pt ~ 50 Gew.-%) in ein bruchsicheres Gefäß (Volumen 100 ml) unter Sauerstoffausschluss eingewogen, anschließend 6 g Reinstwasser und 2 g DMSO hinzugefügt und aufgeschüttelt. Von einer lonomerlösung bestehend aus 12 wt.% lonomerfeststoff aus Beispiel 1, 20 Gew.-% Ethanol, 20 Gew.-% Acetonitril sowie 48Gew.-% DMSO wurden 3.6 g zur katalysatorhaltigen Zusammensetzung hinzugefügt. Das Gemenge wurde in einem Schüttelmischer (Lau, Germany) unter Zuhilfenahme von Mahlkugeln (Gesamtmenge 30 g, Durchmesser 3 mm) für 120 min dispergiert. Der Feststoffgehalt dieser Katalysatortinte betrug demnach 23.5 Gew.-%.

### 9^{bis}. Bereitstellen einer erfindungsgemäßen Katalysatortinte auf Basis von EtOH-ACN-H2O-C

Als noch eine weitere erfinderische Zusammensetzung wurde 15.1 g katalysatorhaltiger Tinte angesetzt. Hierfür wurde zunächst 3 g Pt/C (Pt ~ 50Gew.-%) sowie 0.1 g Ruß (Ketjenblack^{®} 600JD) in ein bruchsicheres Gefäß (Volumen 100 ml) unter Sauerstoffausschluss eingewogen, anschließend 6.4 g Reinstwasser, 2 g DMSO, hinzugefügt und aufgeschüttelt. Von einer lonomerlösung bestehend aus 12 Gew.-% lonomerfeststoff aus Beispiel 1, 20 Gew.-% Ethanol, 20 Gew.-% Acetonitril sowie 48Gew.-% DMSO wurden 3.6 g zur katalysatorhaltigen Zusammensetzung hinzugefügt. Das Gemenge wurde in einem Schüttelmischer (Lau, Germany) unter Zuhilfenahme von Mahlkugeln (Gesamtmenge 30 g, Durchmesser 3 mm) für 120 min dispergiert. Der Feststoffgehalt dieser Katalysatortinte (lonomer-Trockenmasse, Elektrokatalysator + Ruß) betrug demnach 23.4 Gew.-%.

### 9^{ter}. Bereitstellen einer erfindungsgemäßen Katalysatortinte auf Basis von EtOH-ACN-H2O-SiO2

Als noch eine weitere erfinderische Zusammensetzung wurde 15.1 g katalysatorhaltiger Tinte angesetzt. Hierfür wurde zunächst 3 g Pt/C (Pt ~ 50Gew.-%) in ein bruchsicheres Gefäß (Volumen 100 ml) unter Sauerstoffausschluss eingewogen, anschließend 6 g Silicadispersion (5% in H₂O), 0.5 g Wasser und 2 g DMSO, hinzugefügt und aufgeschüttelt. Von einer lonomerlösung bestehend aus 12 Gew.-% lonomerfeststoff aus Beispiel 1, 20 Gew.-% Ethanol, 20 Gew.-% Acetonitril sowie 48Gew.-% DMSO wurden 3.6 g zur katalysatorhaltigen Zusammensetzung hinzugefügt. Das Gemenge wurde in einem Schüttelmischer (Lau, Germany) unter Zuhilfenahme von Mahlkugeln (Gesamtmenge 30 g, Durchmesser 3 mm) für 120 min dispergiert. Der Feststoffgehalt dieser Katalysatortinte (lonomer-Trockenmasse, Elektrokatalysator + Silica) betrug demnach 24.7 Gew.-%.

### 9^{quater}. Bereitstellen einer erfindungsgemäßen Katalysatortinte auf Basis von H2O-DMSO- EtOH-ACN

Als ein weiteres Beispiel für eine erfinderische Zusammensetzung wurde 10.2 g katalysatorhaltiger Tinte angesetzt. Hierfür wurde zunächst 1 g Pt/C (Pt ~ 50Gew.-%) in ein bruchsicheres Gefäß (Volumen 100 ml) unter Sauerstoffausschluss eingewogen, anschließend 6 g Reinstwasser und 2 g DMSO hinzugefügt und aufgeschüttelt. Von einer lonomerlösung bestehend aus 12 Gew.-% Ionomerfeststoff aus Beispiel 1, 20 Gew.-% Ethanol, 20 Gew.-% Acetonitril sowie 48Gew.-% DMSO wurden 1.2 g zur katalysatorhaltigen Zusammensetzung hinzugefügt. Das Gemenge wurde in einem Schüttelmischer (Lau, Germany) unter Zuhilfenahme von Mahlkugeln (Gesamtmenge 30 g, Durchmesser 3 mm) für 120 min dispergiert. Der Feststoffgehalt dieser Katalysatortinte betrug demnach 11.2 Gew.-%.

### 9^{quinquies}. Bereitstellen einer erfindungsgemäßen Katalysatortinte auf Basis von 2-Propanol-ACN

Als eine erfinderische Zusammensetzung wurden 14.85 g einer katalysatorhaltigen Tinte angesetzt. Hierfür wurde zunächst 3 g Pt/C (Pt ~ 50Gew.-%) in ein bruchsicheres Gefäß (Volumen 100 ml) unter Sauerstoffausschluss eingewogen, anschließend 1.0 g Acetonitril sowie 8.5 g 2-propanol, hinzugefügt und aufgeschüttelt. Von einer lonomerlösung bestehend aus 10 Gew.-% Ionomerfeststoff aus Beispiel 1, 45 Gew.-% 2-Propanol, 45 Gew.-% Acetonitril wurden 2.35 g zur katalysatorhaltigen Zusammensetzung hinzugefügt. Das Gemenge wurde in einem Schüttelmischer (Lau, Germany) für 2 Stunden unter Zuhilfenahme von Mahlkugeln (Gesamtmenge 30g, Durchmesser 3 mm) für 120 min dispergiert. Der Feststoffgehalt dieser Katalysatortinte betrug demnach 21.78 Gew.-%.

### 10. Beschichtung einer Membran mit herkömmlicher Tinte mittels Rakel (nicht Teil der Erfindung)

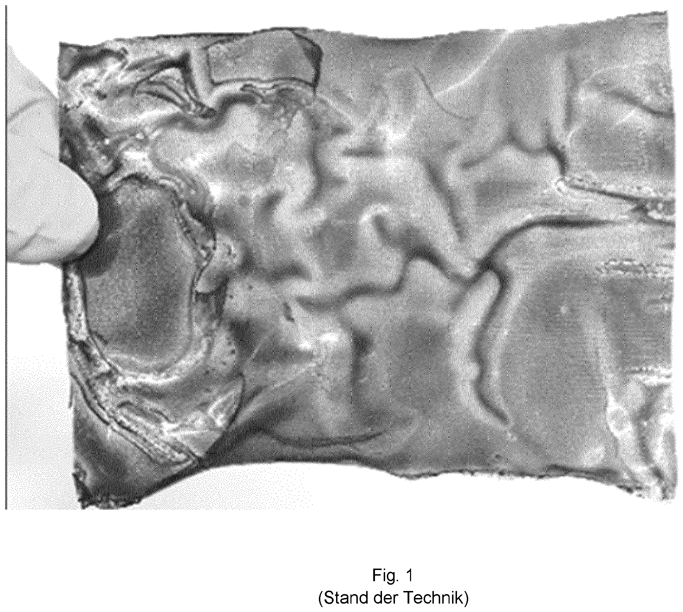

Für den Referenzversuch mit der Formulierung aus WO2023088714 (Beispiel 12) wurde die unter Beispiel 7 bereitgestellte Katalysatortinte mittels automatischen Rakel (Elcometer 4340, Vorschub 5 mm /s, Spiralrakel, 60 µm) auf die in Beispiel 6 hergestellte, Anionen leitende Membran aufgetragen. Anschließend wurde die beschichtete AEM für 10 min bei 80 °C im Laborofen getrocknet. Das Resultat wurde Membran A genannt und ist in Figur 1 zu sehen.
- Fig. 1:: Foto einer mit herkömmlicher Tinte beschichteten Membran A

Wie in Figur 1 zu erkennen ist, hat sich die die Membran bei der Beschichtung stark gewellt. Dadurch ist eine inhomogene Beschichtung entstanden. Dennoch eignet sich die so erhaltene, katalytisch beschichtete AEM prinzipiell zur Wasserelektrolyse.

### 11. Beschichtung einer Membran mit einer nicht erfindungsgemäßen Tinte mit erhöhtem Feststoffanteil mittels Rakel (nicht Teil der Erfindung)

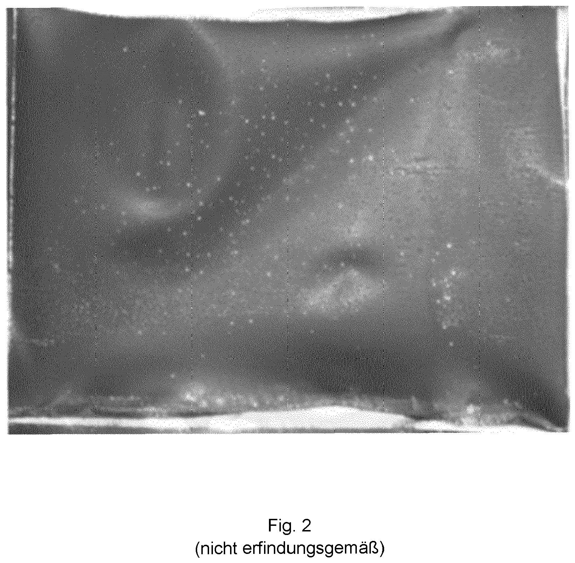

Für den zweiten Referenzversuch wurde die in Beispiel 8 bereitgestellte Zusammensetzung mittels automatischen Rakel (Elcometer 4340, Vorschub 5 mm /s, Spiralrakel, 60 µm) auf die in Beispiel 6 hergestellte Membran aufgetragen. Anschließend wurde die beschichtete Membran für 10 min bei 80 °C im Laborofen getrocknet. Das Resultat wurde Membran B genannt und ist in Figur 2 zu sehen.
- Fig. 2:: Foto einer mit nicht erfindungsgemäßer Tinte beschichteten Membran B

Wie in Figur 2 zu erkennen, hat sich die Membran bei der Beschichtung schwach gewellt. Die Beschichtung wies zahlreiche Stellen mit verhältnismäßig dünner Schichtdicke auf, welche in der Figur 2 als weiße Flecken sichtbar sind. Prinzipiell eignet sich die erhaltene Beschichtung als Elektrode zur Wasserelektrolyse, jedoch ist die Beschichtung nicht optimal.

### 12. Beschichtung von Membranen mit erfindungsgemäßen Katalysatortinten (Teil der Erfindung)

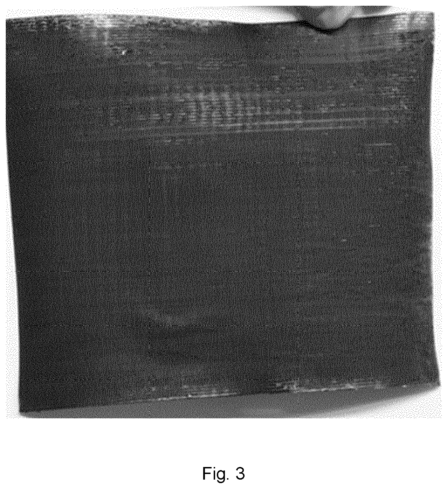

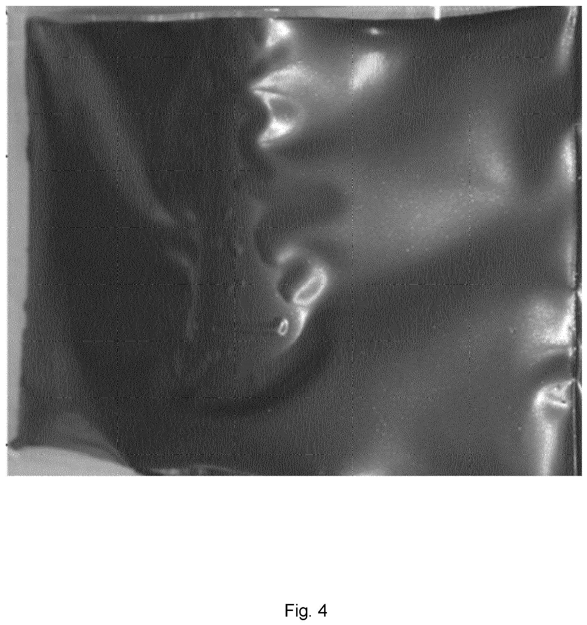

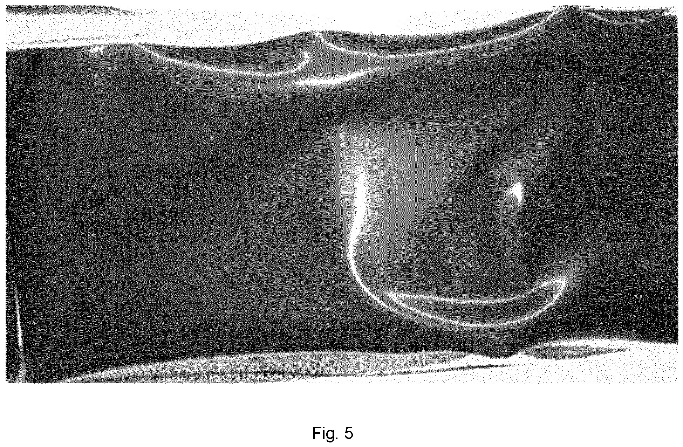

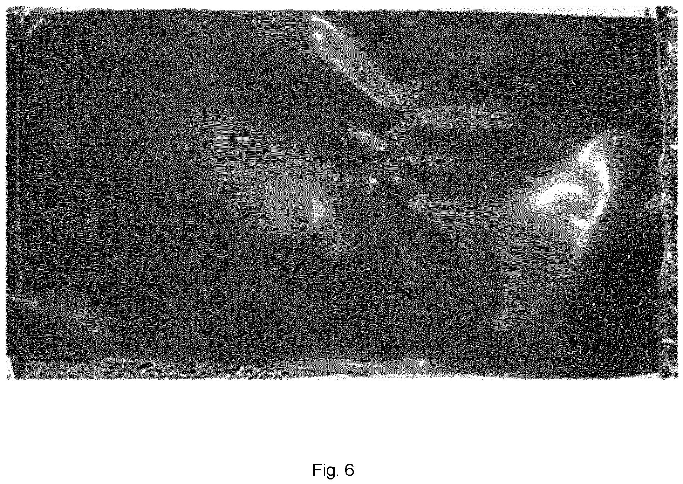

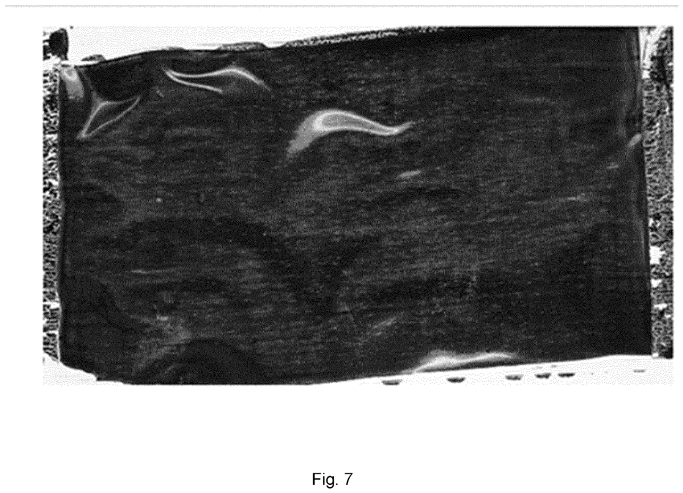

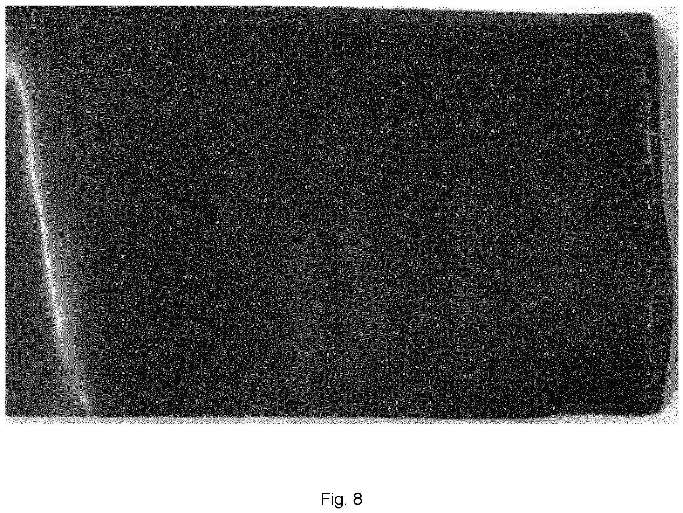

Für die erfinderische Beschichtung mittels ACN/ROH-haltiger Formulierung wurde die in den Beispielen 8^{bis} bis 9^{quinquis} bereitgestellten Tinten mittels automatischen Rakel (Elcometer 4340, Vorschub 5 mm /s, Spiralrakel, 60 µm) jeweils auf eine gemäß Beispiel 6 hergestellte Membran aufgetragen. Anschließend wurden die beschichteten Membranen für 10 min bei 80°C im Laborofen getrocknet. Für die mittels Formulierung aus Beispiel 8^{bis} beschichteter Membran wurde ein zweites Mal über dieselbe Stelle mit gleichen Parametern gerakelt. Das jeweilige Resultat wurde Membran C bis I genannt und ist in Figuren 3 bis 8 zu sehen.
- Fig. 3:: Foto der in Beispiel 8^{bis} beschichteten Membran C
- Fig. 4:: Foto der in Beispiel 8^{ter} beschichteten Membran D
- Fig. 5:: Foto der in Beispiel 9 beschichteten Membran E
- Fig. 6:: Foto der in Beispiel 9^{bis} beschichteten Membran F
- Fig. 7:: Foto der in Beispiel 9^{ter} beschichteten Membran G
- Fig. 8:: Foto der in Beispiel 9^{quater} beschichteten Membran H

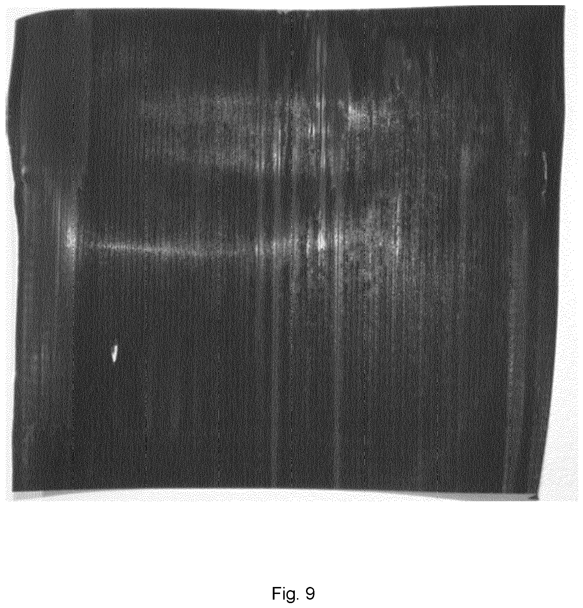

- Fig. 9:: Foto der in Beispiel 9^{quinquies} beschichteten Membran I

Bei den Beschichtungen hat sich die Membran nur leicht gewellt, wodurch eine relativ homogene Beschichtung entstand, die sich als Elektrode zur Wasserelektrolyse eignet.

### 13. Testung einer katalvsatorbeschichteten Membran in einer Elektrolvsetestzelle

Die Performance der katalytisch beschichteten Membranen in der alkalischen Wasserelektrolyse AEMWE wurde verglichen.

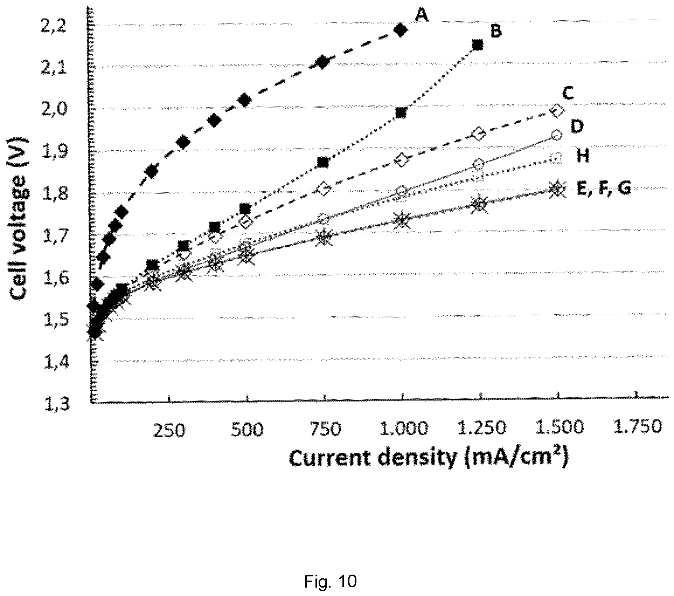

Die katalytisch beschichteten Membranen aus Beispielen 10, 11 und 12 wurden in einer Elektrolysezelle mit Aktivfläche von 25 cm² getestet. Hierbei diente die Katalysatorschicht als Kathodenkatalysator. Anodenseitig wurde jeweils eine formstabile poröse Edelstahlelektrode verwendet. Die Messzelle wurde während der Elektrolyseversuche auf 60 °C temperiert und anoden- sowie kathodenseitig mit 1 M KOH Lösung durchspült. Die charakteristischen Strom-Spannungskennlinien sind in Figur 10 dargestellt; die Legende zeigt Tabelle 2.
- Fig. 10:: Strom-Spannungskennlinien der getesteten CCMs

**Tabelle 2: Legende für Figur 10**

| Tinte | Qualifizierung | Membran | Markierung | Linie |
|---|---|---|---|---|
| 7. | nicht erfinderisch | A | ausgefüllte Rauten | gestrichelt |
| 8. | nicht erfinderisch | B | ausgefüllte Quadrate | gepunktet |
| 8bis | erfinderisch | C | Raute ohne Füllung | gestrichelt |
| 8ter | erfinderisch | D | Kreise ohne Füllung | durchgezogen |
| 9 | erfinderisch | E | Kreuze, 45° gedreht | gepunktet |
| 9bis | erfinderisch | F | Raute ohne Füllung | dünn durchgezogen |
| 9ter | erfinderisch | G | Kreuze mit senkrechter Achse | dünn gestrichelt |
| 9quater | erfinderisch | H | nicht ausgefüllte Quadrate | dünn gepunktete |

Bei den Graphen wurde die benötigte Spannung gegen die extern angelegten Stromstärke aufgetragen. Bei einer konstanten Stromstärke (z.B. 1000 mA/cm²) ist eine niedrige Spannung zu bevorzugen, da hierbei die benötigte elektrische Energie zur Produktion der gleichen Menge Wasserstoff, bei gleicher Herstellungsrate, sinkt und dadurch die Effizienz ansteigt. Besonders relevant für industrielle Anwendung sind die Stromstärken über 500 mA /cm². Es ist zu erkennen, dass die Strom-Spannungskennlinie bei den höheren Stromdichten bei der mit erfinderischer Katalysatortinte hergestellten CCM niedriger ist als die der zur Referenz hergestellten CCM. Die geringere Stromdichte resultiert bei gleicher Spannung in einer geringeren Leistungsaufnahme, sodass der spezifische Energiebedarf der mit erfindungsgemäßer Tinte hergestellten CCM geringer ist.

### 14. Fazit

Aus dem Vergleich der Strom-Spannungskennlinien der Figur 10 ist ersichtlich, dass die mit einer erfindungsgemäßen Katalysatortinte hergestellten CCMs in einer alkalischen Wasserspaltung eine höhere Effizienz erzielen als beide CCMs, welche auf einem anderen Lösemittelgemisch basieren. Die höhere Effizienz kann dadurch erklärt werden, dass die Beschichtung homogener erfolgte und dass durch die erhöhte Viskosität eine etwas dickere Katalysatorschicht aufgetragen werden konnte.

Damit ist belegt, dass sich dank des erfindungsgemäß gewählten Lösemittelgemisches bessere Ergebnisse erzielen lassen, als es allein mit der Erhöhung des Feststoffgehalts herkömmlicher Katalysatortinten möglich wäre.

## Patentansprüche

1. Katalysatortinte umfassend die folgenden Komponenten:
a) ein fester Elektrokatalysator in partikulärer Form;
b) ein flüssiges Lösemittelgemisch enthaltend zumindest Acetonitril und mindestens ein Alkanol;
c) ein Binder, welcher in dem Lösemittelgemisch gelöst ist, wobei es sich bei dem Binder um ein Anionen leitendes Polymer handelt, welches mindestens eine Struktur enthält, die einer der folgenden Formeln (I), (II), (III) entspricht: 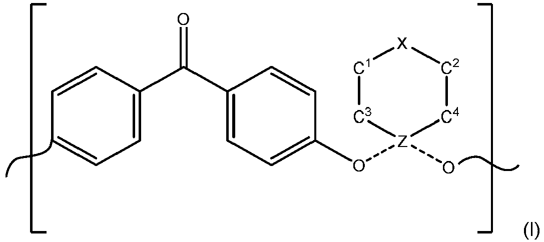
wobei in (I) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 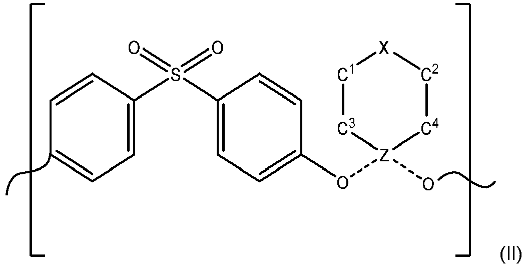
wobei in (II) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 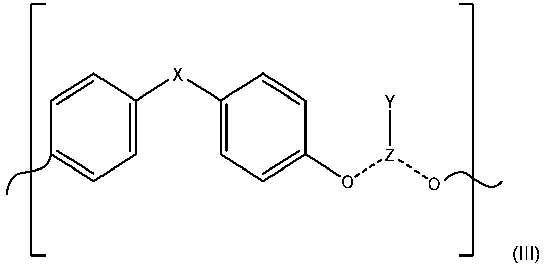
wobei in (III) X für eine Keton- oder Sulfon-Gruppe steht; wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist; und wobei in (III) Y für ein Strukturelement steht, welches mindesten ein Stickstoffatom mit positiver Ladung umfasst, wobei dieses Stickstoffatom mit dem Strukturelement Z verbunden ist;
**dadurch gekennzeichnet,**
**dass** der Gewichtsanteil des Acetonitrils größer ist als der Gewichtsanteil des Binders,
und **dass** der Gewichtsanteil des Alkanols größer ist als der Gewichtsanteil des Binders,
wobei die Gewichtsanteile sich jeweils auf das Gesamtgewicht der Katalysatortinte beziehen.

2. Katalysatortinte nach Anspruch 1, wobei das Verhältnis des Gewichtsanteils des Acetonitrils zum Gewichtsanteils des Alkanols zwischen 1:10 und 17:1 beträgt.

3. Katalysatortinte nach Anspruch 1 oder 2, **dadurch gekennzeichnet, dass** die Katalysatortinte zusätzlich Wasser umfasst.

4. Katalysatortinte nach Anspruch 1 oder 2 oder 3, **dadurch gekennzeichnet, dass** die Katalysatortinte zusätzlich Dimethylsulfoxid umfasst.

5. Katalysatortinte nach jedem der Ansprüche 1 bis 4, **dadurch gekennzeichnet, dass** die jeweils auf das Gesamtgewicht der Katalysatortinte bezogenen Gewichtsanteile der Komponenten in den folgenden Bereichen liegen, unter der Maßgabe, dass die Summe der Gewichtsanteile aller hier gelisteten Komponenten 100 Gew.-% nicht übersteigt:
| | Komponente | Minimalanteil (Gew.-%) | Maximalanteil (Gew.-%) |
|---|---|---|---|
| Dimethylsulfoxid (DMSO) | | 0 | 40 |
| Alkanol (ROH) | | 2 | 75 |
| Acetonitril (ACN) | | 2 | 85 |
| Wasser (H2O) | | 0 | 60 |
| Binder (I), (II), (III) | | 0.8 | 46 |
| Elektrokatalysator (eCat) | | 8 | 35 |

6. Katalysatortinte nach einem der Ansprüche 1 bis 5, **dadurch gekennzeichnet, dass** es sich bei dem Alkanol um Ethanol oder um 2-Propanol oder um 1-Propanol oder um eine Mischung daraus handelt.

7. Katalysatortinte nach einem der vorhergehenden Ansprüche 1 bis 6, **dadurch gekennzeichnet, dass** der Binder vollständig in dem Lösemittelgemisch gelöst ist.

8. Katalysatortinte nach einem der vorhergehenden Ansprüche 1 bis 7, zusätzlich enthaltend noch mindestens eine weitere Komponente, die sich von den vorgenannten Komponenten unterscheidet.

9. Katalysatortinte nach Anspruch 8, **dadurch gekennzeichnet, dass** es sich bei der weiteren Komponente um ein Dispergierhilfsmittel oder um ein Rheologiehilfsmittel oder um ein Tensid oder um ein Leitfähigkeitsadditiv handelt.

10. Katalysatortinte nach einem der Ansprüche 1 bis 9, aufweisend eine dynamische Viskosität *η*, für welche nach der in der Beschreibung definierten Methode ein Kennwert bestimmt ist, **dadurch gekennzeichnet, dass** der Kennwert der dynamischen Viskosität *η* zwischen 10 mPas und 10⁴ mPas liegt.

11. Katalysatortinte nach einem der vorgehergehenden Ansprüche 1 bis 10, **dadurch gekennzeichnet, dass** der Elektrokatalysator mindestens ein Element enthält, welches aus der Gruppe bestehend aus den folgenden Elementen ausgewählt ist: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh), Cer (Ce), wobei das Element in seiner Reinform oder als Oxid oder als Hydroxid oder als Oxidhydroxid oder als Phosphid vorliegt.

12. Verfahren zur Herstellung eines katalytisch beschichteten Substrats, umfassend mindestens die folgenden Schritte:
i) Bereitstellen des Substrats;
ii) Bereitstellen einer Katalysatortinte gemäß einem der Ansprüche 1 bis 11;
iii) Auftragen der Katalysatortinte auf das Substrat;
iv) Trocknen der auf das Substrat aufgetragenen Katalysatortinte.

13. Verfahren nach Anspruch 12, **dadurch gekennzeichnet, dass** das Auftragen der Katalysatortinte auf das Substrat durch Rakeln erfolgt.

14. Verfahren nach Anspruch 12 oder 13, **dadurch gekennzeichnet, dass** es sich bei dem Substrat um eine Anionen leitende Membran handelt.

15. Verfahren nach Anspruch 14, **dadurch gekennzeichnet, dass** die Anionen leitende Membran mindestens eine Struktur enthält, die einer der in Anspruch 1 definierten Formeln (I), (II), (III) entspricht.

16. Katalytisch beschichtetes Substrat, erhältlich durch ein Verfahren nach einem der Ansprüche 12 bis 15.

17. Verwendung eines katalytisch beschichteten Substrats nach Anspruch 16 in einer elektrochemischen Wasserspaltung im basischen Milieu.
